# EUROPÄISCHE PATENTANMELDUNG

(11) **EP 4 563 619 A1**
(43) Veröffentlichungstag der Anmeldung: **04.06.2025**
(21) Anmeldenummer: 23213027.8
(22) Anmeldetag: 29.11.2023
(51) Int. Cl.: C08G 65/32, C08G 65/324

(54) **HÄRTBARE ZUSAMMENSETZUNGEN ENTHALTEND FUNKTIONELLE POLYETHER UND ALDIMINE**

(71) Anmelder: Sika Technology AG, 6340 Baar (CH)
(72) Erfinder: SCHEURER, Rouven, 8483 Kollbrunn (CH); HÄBERLE, Hans, 78262 Gailingen (DE); BURCKHARDT, Urs, 8049 Zürich (CH)
(74) Vertreter: Sika Patent Attorneys

(57) **Zusammenfassung**

Gegenstand der Erfindung ist eine härtbare Zusammensetzung umfassend mindestens ein Polyetherpolymer A mit Ketoestergruppen der Formel (I) oder Aldimingruppen der Formel (II), mit einer mittleren Funktionalität von 1.7 bis 3.0 und einem mittleren Equivalentgewicht von mindestens 500 g/eq, mindestens eine Verbindung B mit Ketoestergruppen der Formel (I) und einem Equivalentgewicht von 114 bis 250 g/eq, und mindestens ein Aldimin L mit Aldimingruppen der Formel (II) und einem Aldimin-Equivalentgewicht von 110 bis 350 g/eq, wobei das Verhältnis zwischen der Anzahl Ketoestergruppen der Formel (I) und der Anzahl Aldimingruppen der Formel (II) bei 2 bis 3 liegt.

Die Zusammensetzung ist frei von toxischen Inhaltsstoffen, nicht empfindlich auf Feuchtigkeit und härtet bei Umgebungsbedingungen ohne Emissionen und störende Gerüche zu einem elastischen Polymer mit hoher Dehnbarkeit und überraschend hohem Weiterreisswiderstand. Die Zusammensetzung ist insbesondere geeignet als elastischer Klebstoff, Dichtstoff oder Beschichtung.

## Beschreibung

### Technisches Gebiet

Die Erfindung betrifft bei Raumtemperatur härtbare Zusammensetzungen und ihre Verwendung als elastische Klebstoffe, Dichtstoffe oder Beschichtungen.

### Stand der Technik

Härtbare Polymerzusammensetzungen, die elastische Eigenschaften erzielen und beispielsweise als Klebstoffe, Dichtstoffe oder Beschichtungen eingesetzt werden können, sind bekannt.

Besonders interessant sind hochelastische Systeme, welche eine hohe Festigkeit und Dehnbarkeit und andererseits keinen ausgeprägten Glasübergang (Tg) im Bereich der Gebrauchstemperatur, insbesondere zwischen etwa -40 bis 80 °C, aufweisen und somit weitgehend temperaturunabhängige mechanische Eigenschaften besitzen. Solche Eigenschaften sind insbesondere für Polyurethane oder mit Polyurethanen eng verwandten Systemen wie Urethangruppen-haltige silanvernetzende Systeme bekannt, zu deren Herstellung Isocyanate eingesetzt werden. Isocyanate sind toxische und feuchteempfindliche Substanzen, deren Handhabung viel technisches Knowhow und Schutzmassnahmen erfordert.

Härtbare Zusammensetzungen, welche als Reaktivgruppen Acetoacetatgruppen enthalten, sind ebenfalls bekannt. Dabei entstehen aber zumeist harte, wenig dehnbare und kaum elastische Polymere. Zudem enthalten viele dieser Systeme grosse Mengen an flüchtigen organischen Lösemitteln, wodurch bei der Aushärtung unerwünschte Emissionen entstehen.

US 5,288,804 beschreibt lösemittelbasierte Lacke auf der Basis von Acetoacetat-funktionellen Acrylatpolymeren, welche mittels aromatischen Polyaldiminen ausgehärtet werden. US 6,297,320 beschreibt lösemittelbasierte Korrosionsschutz-Lacke auf der Basis von Acetoacetat-funktionellen Acrylatpolymeren und niedrigmolekularen Acetoacetaten als Reaktivverdünner, welche mittels aliphatischen Ketiminen ausgehärtet werden. Diese Zusammensetzungen sind nicht elastisch und führen zu starken Emissionen.

US 6,204,343 beschreibt härtbare Zusammensetzungen auf der Basis von Acetoacetat-funktionellen Polyolen, welche mit Acrylaten ausgehärtet werden, für die Einbettung elektrischer Bauteile. Auch diese Zusammensetzungen sind nicht elastisch.

### Darstellung der Erfindung

Aufgabe der vorliegenden Erfindung ist es, eine bei Raumtemperatur härtbare Polymerzusammensetzung zur Verfügung zu stellen, welche elastische Produkte mit guter Festigkeit und hoher Dehnbarkeit ermöglicht und die Nachteile des Standes der Technik in Bezug auf toxische Inhaltsstoffe, Feuchteempfindlichkeit und Emissionen überwindet.

Überraschenderweise wird diese Aufgabe mit einer härtbaren Zusammensetzung wie in Anspruch 1 beschrieben gelöst. Die Zusammensetzung umfasst mindestens ein Polyetherpolymer **A** mit Ketoestergruppen der Formel (I) oder Aldimingruppen der Formel (II), mindestens eine Verbindung **B** mit Ketoestergruppen der Formel (I) und mindestens ein Aldimin **L** mit Aldimingruppen der Formel (II), wobei das Verhältnis zwischen der Anzahl Ketoestergruppen der Formel (I) und der Anzahl Aldimingruppen der Formel (II) bei 2 bis 3 liegt.

Die erfindungsgemässe härtbare Zusammensetzung basiert auf gut zugänglichen Ausgangsstoffen und ist einfach in der Handhabung, da sie frei von toxischen Inhaltsstoffen und nicht empfindlich gegen Feuchtigkeit ist, weder bei der Lagerung noch bei der Applikation und Aushärtung. Sie härtet bei Raumtemperatur schnell und störungsfrei ohne Emissionen und Gerüche zu einem nicht-klebrigen Polymer mit hervorragenden mechanischen Eigenschaften. Trotz der Abwesenheit von Urethangruppen entsteht ein hochwertiges vernetztes elastisches Polymer mit hoher Festigkeit und Dehnbarkeit und überraschend hohem Weiterreisswiderstand. Die Kombination dieser Eigenschaften ist aussergewöhnlich und kann aus den im Stand der Technik beschriebenen Systemen nicht abgeleitet werden. Die Inhaltsstoffe der erfindungsgemässen Zusammensetzung sind insbesondere bei Raumtemperatur flüssig und verhältnismässig niedrigviskos, so dass die Zusammensetzung bei Raumtemperatur gut verarbeitbar ist und keine Lösemittel zur Verdünnung benötigt. Überraschenderweise härtet die Zusammensetzung vollständig geruchsfrei aus, auch dann, wenn sie Aldimine enthält, die von flüchtigen Aldehyden wie Benzaldehyd abgeleitet sind. Dies deutet darauf hin, dass der dem Aldimin zugrunde liegende Aldehyd nicht freigesetzt, sondern ins Polymer eingebunden wird und somit dauerhaft in der ausgehärteten Zusammensetzung verbleibt.

In einer bevorzugten Ausführungsform entstehen ausgehärtete Polymere, welche im Temperaturbereich von -20 bis 60 °C, insbesondere -40 bis 80 °C, keinen Glasübergang (Tg) aufweisen. Solche elastische Polymere mit hohem Weiterreisswiderstand und weitgehend temperaturunabhängigen Eigenschaften sind äusserst überraschend, vor allem auch, weil sie ohne Urethangruppen und somit ohne Verwendung von Isocyanaten erhalten werden.

Die erfindungsgemässe Zusammensetzung ist besonders geeignet für die Verwendung als Klebstoff, Dichtstoff oder Beschichtung, insbesondere für Anwendungen, bei denen eine hohe Elastizität bei hohem Weiterreisswiderstand und weitgehend temperaturunabhängige Eigenschaften gefordert sind, sowie für Anwendungen, wo zusätzliche Aspekte wie eine geringe Toxizität der Inhaltsstoffe, Unempfindlichkeit gegenüber Feuchtigkeit, eine schnelle Aushärtung bei Umgebungsbedingungen oder geringe Emissionen wichtig sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- mindestens ein Polyetherpolymer **A** mit Ketoestergruppen der Formel (I) oder Aldimingruppen der Formel (II), welches in Bezug auf diese Reaktivgruppen eine mittlere Funktionalität von 1.7 bis 3.0 und ein mittleres Equivalentgewicht von mindestens 500 g/eq aufweist,
- mindestens eine Verbindung **B** mit Ketoestergruppen der Formel (I), welches in Bezug auf diese Reaktivgruppen ein Equivalentgewicht von 114 bis 250 g/eq aufweist, und
- mindestens ein Aldimin **L** mit Aldimingruppen der Formel (II) und einem Aldimin-Equivalentgewicht von 110 bis 350 g/eq,

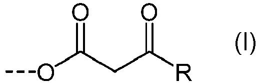

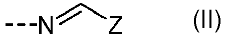

wobei R für einen einwertigen Kohlenwasserstoffrest mit 1 bis 10 C-Atomen steht und Z für einen aromatischen oder heteroaromatischen fünf- oder sechsgliedrigen Ring steht, der gegebenenfalls substituiert und/oder anelliert ist und insgesamt 4 bis 25 C-Atome umfasst, und
wobei das Verhältnis zwischen der Anzahl Ketoestergruppen der Formel (I) und der Anzahl Aldimingruppen der Formel (II) in der gesamten Zusammensetzung bei 2 bis 3 liegt.

Eine gestrichelte Linie in den Formeln in diesem Dokument stellt jeweils die Bindung zwischen einem Substituenten und dem zugehörigen Molekülrest dar.

Mit "Poly" beginnende Substanznamen wie Polyaldimin oder Polyol bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

In der härtbaren Zusammensetzung liegt das Verhältnis zwischen der Anzahl Ketoestergruppen der Formel (I) und der Anzahl Aldimingruppen der Formel (II) bei 2 bis 3. Überraschenderweise wird in diesem Bereich ein Polymer mit besonders guten mechanischen Eigenschaften erhalten. Bevorzugt liegt das Verhältnis zwischen der Anzahl Ketoestergruppen der Formel (I) und der Anzahl Aldimingruppen der Formel (II) bei 2.2 bis 2.7, insbesondere bei etwa 2.5.

Bevorzugt weist das Polyetherpolymer **A** ein mittleres Equivalentgewicht von 500 bis 6'000 g/eq auf.

Besonders bevorzugt weist das Polyetherpolymer **A** ein mittleres Equivalentgewicht von 1'000 bis 6'000 g/eq, insbesondere 1'500 bis 3'000 g/eq, auf.

Eine solche Zusammensetzung ermöglicht ausgehärtete Polymere, welche im Temperaturbereich von -20 bis 60 °C, insbesondere -40 bis 80 °C, keinen Glasübergang (Tg) aufweisen. Solche Polymere ermöglichen einen besonders breiten Bereich der Gebrauchstemperatur von damit verklebten, abgedichteten oder beschichteten Artikeln, in welchem die mechanischen Eigenschaften weitgehend temperaturunabhängig sind.

Bevorzugt weist das Polyetherpolymer **A** ein mittleres Molekulargewicht Mₙ von 1'000 bis 15'000 g/mol, besonders bevorzugt 2'000 bis 10'000 g/ mol, insbesondere 3'000 bis 6'000 g/ mol, auf.

Bevorzugt weist das Polyetherpolymer **A** eine mittlere Funktionalität von 1.8 bis 3.0, insbesondere von 1.8 bis 2.0, auf. Dies ermöglicht elastische Polymere mit besonders hoher Dehnung und Elastizität.

Bevorzugt enthält das Polyetherpolymer **A** Repetiereinheiten ausgewählt aus der Liste bestehend aus Oxy-1,2-propylen, Oxy-1,3-propylen, Oxy-1,4-butylen, Oxy-1,2-butylen und Oxyphenylethylen. Zusätzlich kann das Polyetherpolymer **A** einen gewissen Gehalt an Oxyethylen Einheiten aufweisen, insbesondere höchstens 25 Gewichts-% Oxyethylen bezogen auf das Gesamtgewicht der Polyether-Einheiten.

Besonders bevorzugt sind Oxy-1,2-propylen oder Oxy-1,4-butylen. Am meisten bevorzugt ist Oxy-1,2-propylen.

Als Polyetherpolymer **A** besonders bevorzugt ist ein Poly(oxy-1,2-propylen)polymer, insbesondere ein lineares Poly(oxy-1,2-propylen)polymer oder ein verzweigtes Poly(oxy-1,2-propylen)polymer, welches insbesondere auf 1,1,1-Trimethylolpropan oder auf Glycerin gestartet ist.

Am meisten bevorzugt als Polyetherpolymer **A** ist ein lineares Poly(oxy-1,2-propylen)polymer.

Bevorzugt ist das Polyetherpolymer **A** bei Raumtemperatur flüssig und niedrigviskos. Insbesondere weist es eine Viskosität bei 20 °C von 0.1 bis 10 Pa s, bevorzugt 0.1 bis 5 Pa s, insbesondere 0.2 bis 2.5 Pa s, auf, gemessen mittels Kegel-Platte Viskosimeter mit Kegeldurchmesser 10 mm, Kegelwinkel 1°, Kegelspitze-Platte-Abstand 0.05 mm und Scherrate 10 s⁻¹, für Viskositäten von weniger als 0.5 Pa s mit Kegeldurchmesser von 50 mm und Scherrate von 100 s⁻¹. Ein solches Polymer ist bei Umgebungstemperaturen auch ohne Zusatz von Lösemitteln oder Verdünnern sehr gut handhabbar und ermöglicht sehr gut verarbeitbare Zusammensetzungen.

Bevorzugt steht R in den Ketoestergruppen der Formel (I) für Methyl, Ethyl, Propyl, Isopropyl, Butyl oder Phenyl, insbesondere für Methyl oder Phenyl.

Besonders bevorzugt steht R für Methyl und die Ketoestergruppen der Formel (I) stehen somit für Acetoacetatgruppen. Polyetherpolymere **A** und Verbindungen **B** mit Acetoacetatgruppen sind besonders einfach zugänglich und ermöglichen Zusammensetzungen mit besonders schneller Aushärtung.

Bevorzugt steht Z in den Aldimingruppen der Formel (II) für einen gegebenenfalls substituierten Phenylrest, einen gegebenenfalls substituierten Naphthylrest oder einen gegebenenfalls substituierten Furylrest, Pyridinrest, Pyrrolrest, Indolrest oder Thiophenrest, insbesondere für einen gegebenenfalls substituierten Phenylrest, einen gegebenenfalls substituierten Naphthylrest oder einen gegebenenfalls substituierten Furylrest.

Insbesondere ist Z ausgewählt aus der Liste bestehend aus Phenyl, 2-Methylphenyl, 3-Methylphenyl, 4-Methylphenyl, 4-Ethylphenyl, 4-Isopropylphenyl, 4-tert-Butylphenyl, 4-C₁₀₋₁₄-Alkylphenyl, 2-Hydroxyphenyl, 3-Hydroxyphenyl, 4-Hydroxyphenyl, 2,5-Dimethylphenyl, 2-Methoxyphenyl, 3-Methoxyphenyl, 4-Methoxyphenyl, 2-Ethoxyphenyl, 3-Ethoxyphenyl, 4-Ethoxyphenyl, 4-Propoxyphenyl, 4-lsopropoxyphenyl, 4-Butoxyphenyl, 4-Pentoxyphenyl, 4-Decyloxyphenyl, 4-Dodecyloxyphenyl, 2,3-Dimethoxyphenyl, 2,4-Dimethoxyphenyl, 2,5-Dimethoxyphenyl, 3,4-Dimethoxyphenyl, 3,5-Dimethoxyphenyl, 4-Hydroxy-3-methoxyphenyl, 2,4,6-Trimethylphenyl, 2,4,5-Trimethoxyphenyl, 2,4,6-Trimethoxyphenyl, 3,4,5-Trimethoxyphenyl, 1-Naphthyl, 2-Naphthyl, 2-Furyl, 5-Methyl-2-furyl und 5-Hydroxymethyl-2-furyl.

Besonders bevorzugt sind Phenyl, 2-Methylphenyl, 3-Methylphenyl, 4-Methylphenyl, 4-Methoxyphenyl, 3,4-Dimethoxyphenyl, 2-Furyl oder 5-Hydroxymethyl-2-furyl.

Am meisten bevorzugt steht Z für Phenyl. Diese Aldimine sind abgeleitet von Benzaldehyd. Sie sind besonders einfach verfügbar und ermöglichen eine besonders schnelle Aushärtung.

Aldimine abgeleitet von Benzaldehyd oder anderen flüchtigen Aldehyden verursachen in härtbaren Zusammensetzungen typischerweise einen starken, unangenehmen Geruch, welcher während und nach der Applikation deutlich wahrnehmbar ist und ihre Verwendung stark einschränkt. Im Fall der erfindungsgemässen härtbaren Zusammensetzung entsteht überraschenderweise aber kein Aldehyd-Geruch, was besonders vorteilhaft ist, da die Zusammensetzung ohne Einschränkung auch in geruchssensitiven Anwendungen eingesetzt werden kann, beispielsweise in Gebäudeinnenräumen oder in Automobilen.

Besonders bevorzugt enthält das Polyetherpolymer **A** Ketoestergruppen der Formel (I). Ein solches Polyetherpolymer **A** ist besonders einfach zugänglich, niederviskos und ermöglicht eine schnelle Aushärtung und die beschriebenen vorteilhaften mechanischen Eigenschaften.

Ein Polyetherpolymer **A** mit Ketoestergruppen der Formel (I) wird bevorzugt erhalten aus der Umesterung von mindestens einem Polyetherpolyol mit mindestens einem 1,3-Ketoester der Formel (IV), 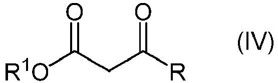 wobei R¹ für C₁₋₆ Alkyl steht und R die bereits genannten Bedeutungen aufweist. Bevorzugt steht R¹ für Methyl, Ethyl oder tert-Butyl, besonders bevorzugt für Ethyl oder tert-Butyl, insbesondere für Ethyl.

Bevorzugt erfolgt die Umesterung bei einer Temperatur im Bereich von 50 bis 180 °C unter destillativer Entfernung des freigesetzten Alkohols R¹OH und gegebenenfalls Fragmentierungsprodukten davon, gegebenenfalls unter Vakuum und gegebenenfalls in Anwesenheit eines geeigneten Katalysators.

Ebenfalls möglich ist eine Herstellung, bei welcher das Polyetherpolyol mit Diketen oder dem Addukt von Diketen mit Aceton (= 2,2,6-Trimethyl-4H-1,3-dioxin-4-on) umgesetzt wird, wobei im Fall des Aceton-Diketen-Addukts Aceton freigesetzt wird.

Als Polyetherpolyol bevorzugt sind Poly(oxy-1,2-propylen)diole oder Poly(oxy-1,2-propylen)triole, wobei diese an den Kettenenden gegebenenfalls einen Gehalt bis zu 25 Gewichts-% an Oxy-1,2-ethylen-Einheiten enthalten können, Poly(oxy-1,3-propylen)diole oder -triole oder Poly(oxy-1,4-butylen)diole, welche auch als Polytetrahydrofurane bezeichnet werden.

Am meisten bevorzugt ist ein Poly(oxy-1,2-propylen)diol mit einer OH-Zahl von 14 bis 112 mg KOH/g, bevorzugt 14 bis 56 mg KOH/g, besonders bevorzugt 19 bis 40 mg KOH/g, insbesondere mit einer OH-Zahl von ca. 28 mg KOH/g.

Besonders bevorzugt als Polyetherpolymer **A** mit Ketoestergruppen der Formel (I) ist somit ein Poly(oxy-1,2-propylen)diol-diacetoacetat mit einem mittleren Equivalentgewicht von 1'000 bis 5'000 g/eq, bevorzugt 1'500 bis 3'000 g/eq.

In einer Ausführungsform der Erfindung enthält das Polyetherpolymer **A** Aldimingruppen der Formel (II). Ein solches Polyetherpolymer **A** ist insbesondere abgeleitet von einem Polyetherdi- oder triamin. Überraschenderweise ermöglicht ein solches Polyetherpolymer **A** weitgehend die gleichen mechanischen Eigenschaften und Glasübergangstemperaturen wie bei der Verwendung eines entsprechenden Polyetherpolymers **A** mit Ketoestergruppen der Formel (I).

Als Polyetherpolymer **A** mit Aldimingruppen der Formel (II) bevorzugt sind N,N'-Dibenzyliden-poly(oxy-1,2-propylen)diamine oder N,N', N"-Tribenzyliden-poly(oxy-1,2-propylen)triamine abgeleitet von Jeffamine^{®} D-2000, Jeffamine^{®} D-4000 oder Jeffamine^{®} T-5000 (alle von Huntsman) oder entsprechenden Polyetheraminen von BASF oder Nitroil.

Besonders bevorzugt als Polyetherpolymer **A** mit Aldimingruppen der Formel (II) ist N,N'-Dibenzyliden-poly(oxy-1,2-propylen)diamin mit einem mittleren Equivalentgewicht von 1'000 bis 3'000 g/eq, bevorzugt 1'500 bis 3'000 g/eq.

Die härtbare Zusammensetzung umfasst weiterhin mindestens eine Verbindung **B** mit Ketoestergruppen der Formel (I) und einem Equivalentgewicht von 114 bis 250 g/eq.

Bevorzugt hat die Verbindung **B** zwei bis vier, insbesondere zwei bis drei, Ketoestergruppen der Formel (I).

Bevorzugt weist die Verbindung **B** ein Equivalentgewicht von 114 bis 200 g/eq auf.

Die Verbindung **B** ist insbesondere ein Ester eines Polyalkohols mit mindestens einem 1,3-Ketoester der Formel (IV) unter Freisetzung und Entfernung des Alkohols der Formel R¹OH und gegebenenfalls Fragmentierungsprodukten davon, hergestellt wie vorgängig für ein Polyetherpolymer **A** mit Ketoestergruppen der Formel (I) beschrieben.

Als Polyalkohol für die Herstellung einer Verbindung **B** geeignet sind insbesondere 1,2-Ethandiol, Diethylenglykol, Triethylenglykol, 1,2-Propandiol, Dipropylenglykol, Tripropylenglykol, 1,3-Propandiol, 1,4-Butandiol, 1,2-Butandiol, 2-Methyl-1,3-propandiol, 1,5-Pentandiol, 1,2-Pentandiol, Neopentylglykol, 2-Methyl-1,4-butandiol, 1,6-Hexandiol, 3-Methyl-1,5-pentandiol, 1,8-Octandiol, 1,10-Decandiol, 1,12-Dodecandiol, Polytetrahydrofurandiol mit mittlerem Molekulargewicht Mₙ von 200 bis 300 g/mol, 1,3-Cyclohexandimethanol, 1,4-Cyclohexandimethanol, Isosorbid, 2,5-Bis(hydroxymethyl)tetrahydrofuran, 2,5(6)-Bis(hydroxymethyl)bicyclo[2.2.1]heptan, 3(4),8(9)-Bis(hydroxymethyl)tricyclo[5.2.1.0^{2,6}]decan, hydriertes Bisphenol F, hydriertes Bisphenol A, Glycerin, 1,1,1-Trimethylolethan, 1,1,1-Trimethylolpropan, ethoxyliertes oder insbesondere propoxyliertes Glycerin, oder ethoxyliertes oder insbesondere propoxyliertes 1,1,1-Trimethylolpropan.

Bevorzugt sind 1,2-Propandiol, Dipropylenglykol, Tripropylenglykol, 1,3-Propandiol, 1,4-Butandiol, 2-Methyl-1,3-propandiol, 1,5-Pentandiol, Neopentylglykol, 1,6-Hexandiol, Isosorbid, hydriertes Bisphenol A, Polytetrahydrofurandiol mit mittlerem Molekulargewicht Mₙ von 200 bis 300 g/mol, Glycerin, 1,1,1-Trimethylolethan, 1,1,1-Trimethylolpropan oder propoxyliertes 1,1,1-Trimethylolpropan mit mittlerem Molekulargewicht Mₙ von 250 bis 500 g/mol.

Bevorzugt ist die Verbindung **B** ausgewählt aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Isosorbid-diacetoacetat, 4,4'-Isopropyliden-bis(cyclohexanol)diacetoacetat, Polytetrahydrofuran-diacetoacetat mit mittlerem Molekulargewicht Mₙ von 350 bis 450 g/mol, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat und dem Triacetoacetat von propoxyliertem 1,1,1-Trimethylolpropan mit insgesamt einem mittleren Molekulargewicht Mₙ von 500 bis 750 g/mol.

Davon bevorzugt sind Diacetoacetate, insbesondere 1,2-Propandioldiacetoacetat, Dipropylenglykoldiacetoacetat, Tripropylenglykoldiacetoacetat, 1,3-Propandiol-diacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat oder Polytetrahydrofurandiol mit mittlerem Molekulargewicht Mₙ von 200 bis 300 g/mol,.

Besonders bevorzugt ist Neopentylglykoldiacetoacetat. Damit werden Polymere mit besonders hoher Festigkeit und Wasserbeständigkeit erhalten.

Bevorzugt liegt das Gewichtsverhältnis zwischen Verbindungen **B** und Polyetherpolymeren **A** im Bereich von 15/85 bis 85/15, bevorzugt 20/80 bis 80/20, insbesondere 25/75 bis 75/25. Damit werden elastische Polymere mit guter Festigkeit, hoher Dehnbarkeit und hohem Weiterreisswiderstand erhalten, wobei ein hoher Gehalt an Polyetherpolymer **A** eher weichelastische Eigenschaften und ein hoher Gehalt an Verbindung **B** eher höhere Festigkeiten ermöglicht.

Die härtbare Zusammensetzung umfasst weiterhin mindestens ein Aldimin **L** mit Aldimingruppen der Formel (II) und einem Aldimin-Equivalentgewicht von 110 bis 350 g/eq.

Bevorzugt hat das Aldimin **L** eins bis drei, insbesondere zwei bis drei, Aldimingruppen der Formel (II).

Bevorzugt als Aldimin **L** ist ein Aldimin der Formel (III), 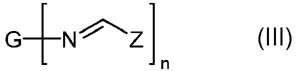 wobei n für 2 oder 3 und G für einen n-wertigen organischen Rest mit 2 bis 25 C-Atomen stehen und Z die bereits genannten Bedeutungen aufweist.

Bevorzugt steht G für einen zweiwertigen Kohlenwasserstoffrest mit 5 bis 15 C-Atomen oder für einen zwei- oder dreiwertigen Polyoxyalkylen-Rest mit einem mittleren Molekulargewicht Mₙ von 160 bis 500 g/mol.

Das Aldimin der Formel (III) ist abgeleitet von einem primären Amin und einem aromatischen oder heteroaromatischen Aldehyd, aus welchen es durch eine Kondensationsreaktion erhältlich ist.

Als primäres Amin bevorzugt sind handelsübliche aliphatische oder cycloaliphatische primäre Amine, insbesondere ausgewählt aus der Liste bestehend aus 1,2-Ethandiamin, 1,2-Propandiamin, 1,3-Propandiamin, 1,4-Butandiamin, 1,5-Pentandiamin, 2,2-Dimethyl-1,3-propandiamin, 1,3-Pentandiamin (DAMP), 1,6-Hexandiamin, 1,5-Diamino-2-methylpentan (MPMD), 1,7-Heptandiamin, 1,8-Octandiamin, 2,5-Dimethyl-1,6-hexandiamin, 1,9-Nonandiamin, 2,2(4),4-Trimethyl-1,6-hexandiamin (TMD), 1,10-Decandiamin, 1,11-Undecandiamin, 2-Butyl-2-ethyl-1,5-pentandiamin (C11-Neodiamin), 1,12-Dodecandiamin, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, 1,3-Bis(aminomethyl)benzol (MXDA), Isophorondiamin (IPDA), 2(4)-Methyl-1,3-diaminocyclohexan, Bis(4-aminocyclohexyl)-methan, 2,5(6)-Bis(aminomethyl)bicyclo[2.2.1]heptan (NBDA), 3(4),8(9)-Bis(aminomethyl)tricyclo[5.2.1.0^{2,6}]decan (TCD-Diamin), 4,9-Dioxadodecan-1,12-diamin, 4,7,10-Trioxatridecan-1,13-diamin, Polyoxypropylendiaminen mit einem mittleren Molekulargewicht Mₙ von 200 bis 500 g/mol und Polyoxypropylentriaminen mit einem mittleren Molekulargewicht Mₙ von 300 bis 500 g/mol.

Bevorzugte Polyoxypropylendi- oder-triamine sind Jeffamine^{®} D-230, Jeffamine^{®} D-400 oder Jeffamine^{®} T-403 (alle von Huntsman), sowie entsprechende Typen von BASF oder Nitroil.

Als aromatischer oder heteroaromatischer Aldehyd bevorzugt sind Benzaldehyd, 2-Tolualdehyd, 3-Tolualdehyd, 4-Tolualdehyd, 4-Ethylbenzaldehyd, 4-Isopropylbenzaldehyd, 4-tert-Butylbenzaldehyd, 4-C₁₀₋₁₄-Alkylbenzaldehyd, Salicylaldehyd, alkoxylierter Salicylaldehyd wie insbesondere 2-(2-Hydroxyethoxy)benzaldehyd, 3-Hydroxybenzaldehyd, 4-Hydroxybenzaldehyd, 2,5-Dimethylbenzaldehyd, 2-Methoxybenzaldehyd, 3-Methoxybenzaldehyd, 4-Methoxybenzaldehyd, 2-Ethoxybenzaldehyd, 3-Ethoxybenzaldehyd, 4-Ethoxybenzaldehyd, 4-Propoxybenzaldehyd, 4-Isopropoxybenzaldehyd, 4-Butoxybenzaldehyd, 4-Pentoxybenzaldehyd, 4-Decyloxybenzaldehyd, 4-Dodecyloxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 4-Hydroxy-3-methoxybenzaldehyd (Vanillin), 2,4,6-Trimethylbenzaldehyd, 2,4,5-Trimethoxybenzaldehyd, 2,4,6-Trimethoxybenzaldehyd, 3,4,5-Trimethoxybenzaldehyd, 1-Naphthaldehyd, 2-Naphthaldehyd, Furfural, 5-Methylfurfural oder 5-Hydroxymethylfurfural.

Besonders bevorzugt ist Benzaldehyd, Tolualdehyd, 4-Methoxybenzaldehyd, Furfural oder 5-Hydroxymethylfurfural.

Am meisten bevorzugt ist Benzaldehyd.

Aldimine der Formel (III) zeigen teilweise eine deutliche Neigung zum Kristallisieren. Bevorzugt sind Aldimine der Formel (III), welche als solche oder als Mischung untereinander bei Raumtemperatur ohne Zusatz von Lösemitteln oder Verdünnern dauerhaft flüssig sind. Solche Aldimine ermöglichen Zusammensetzungen mit geringer Emission.

Bevorzugte Aldimine der Formel (III) sind ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenz-yliden-1,3-bis(aminomethyl)benzol, N,N'-Dibenzylidenisophorondiamin, N,N'-Di- benzyliden-4,4'-methylen-bis(cyclohexylamin), N,N'-Dibenzylidenpolyoxypropylen- diaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, 4-Methoxybenzaldehyd, Furfural und 5-Hydroxymethylfurfural anstelle von Benzaldehyd.

Besonders bevorzugt sind N,N'-Dibenzyliden-1,5-pentandiamin, Mischungen von N,N'-Dibenzyliden-1,5-pentandiamin und N,N'-Dibenzyliden-1,6-hexandiamin, insbesondere im Molverhältnis von etwa 1:1, N,N'-Dibenzyliden-2-methyl-1,5-pentandiamin, N,N'-Dibenzylidenpolyoxypropylendiamine mit mittlerem Molekulargewicht Mₙ von 350 bis 750 g/mol, sowie Mischungen davon mit einem weiteren Aldimin der Formel (III). Diese Aldimine oder Aldimin-Mischungen neigen kaum zum Kristallisieren und sind bei Raumtemperatur typischerweise dauerhaft flüssig.

Ganz besonders bevorzugt ist N,N'-Dibenzyliden-1,5-pentandiamin. Damit werden besonders hohe Festigkeiten erhalten und damit ausgehärtete Polymere zeigen einen besonders breiten Bereich ohne Glasübergangstemperatur mit einer besonders hohen oberen Glasübergangstemperatur.

Weiterhin ganz besonders bevorzugt sind N,N'-Dibenzylidenpolyoxypropylen-diamine mit mittlerem Molekulargewicht Mₙ von 350 bis 700 g/mol, insbesondere 400 bis 750 g/mol. Damit wird eine besonders gute Dehnbarkeit und Zähelastizität erhalten.

Bevorzugt sind das Polyetherpolymer **A,** die Verbindung **B** und das Aldimin **L** jeweils bei Raumtemperatur flüssig. Insbesondere sind sie bei Raumtemperatur ohne Zusatz von Lösemitteln oder Verdünnern im flüssigen Zustand gut handhabbar. Eine solche Zusammensetzung verfügt über eine gute Verarbeitbarkeit bei besonders wenig Emission.

Die härtbare Zusammensetzung kann zusätzlich weitere Bestandteile enthalten, insbesondere
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, MetallPulver, beispielsweise von Aluminium, Kupfer, Eisen, Silber oder Stahl, PVC-Pulver oder Hohlkugeln,
- Fasern, insbesondere Glasfasern, Kohlefasern, Metallfasern, Keramikfasern, Hanffasern, Zellulosefasern oder Kunststofffasern wie Polyamidfasern, Polyethylenfasern oder Polypropylenfasern,
- Nanofüllstoffe oder Nanofasen wie Graphen oder Carbon Nanotubes,
- Farbstoffe,
- Pigmente, insbesondere Titandioxid, Chromoxid, Eisenoxide oder organische Pigmente,
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder -triole, gegebenenfalls mit blockierten Hydroxylgruppen, insbesondere in der Form von Acetylgruppen, sowie organische Sulfonate oder Phosphate, insbesondere Diphenylkresylphosphat (DPK) oder Tris-2-ethyl-hexylphosphat (TOF), Polybutene, Polyisobutene oder von natürlichen Fetten oder Ölen abgeleitete Weichmacher, insbesondere epoxidiertes Soja- oder Leinöl oder Rapsölmethylester, wobei Phthalate, hydrierte Phthalate, Adipate oder Weichmacher mit Polyetherstruktur bevorzugt sind,
- Lösemittel,
- Modifizierungsmittel wie Kohlenwasserstoffharze, natürliche oder synthetische Wachse oder Bitumen,
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene,
- Trocknungsmittel, insbesondere Molekularsiebe, Calciumoxid, Mono-Oxazolidine wie Incozol^{®} 2 (von Incorez), Orthoester oder Alkoxysilane,
- Haftvermittler, insbesondere Titanate oder Organoalkoxysilane wie Aminosilane, Mercaptosilane, Epoxysilane, (Meth)acrylsilane, Carbamatosilane, Alkylsilane, S-(Alkylcarbonyl)mercaptosilane oder oligomere Formen dieser Silane,
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Styrol, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO),
- flammhemmende Substanzen, insbesondere die bereits genannten Füllstoffe Aluminiumhydroxid oder Magnesiumhydroxid, organische Phosphorsäureester, Ammoniumpolyphosphate, expandierender Graphit, Melaminverbindungen, Borverbindungen oder Antimonverbindungen,
- Additive, insbesondere Netzmittel, Verlaufmittel, Entschäumer, Entlüfter, Stabilisatoren gegen Oxidation, Wärme, Licht oder UV-Strahlung oder Biozide,
sowie weitere üblicherweise in härtbaren Zusammensetzungen eingesetzte Substanzen.

Die härtbare Zusammensetzung enthält bezogen auf die gesamte Zusammensetzung bevorzugt weniger als 10 Gewichts-%, besonders bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel. Eine solche Zusammensetzung verursacht besonders wenig Emissionen.

Die härtbare Zusammensetzung ist bevorzugt nicht wasserbasiert, das heisst sie liegt weder als Lösung noch als Emulsion oder Dispersion in Wasser vor. Sie ist bevorzugt weitgehend frei von Wasser oder enthält nur einen geringen Gehalt an Wasser. Eine solche Zusammensetzung härtet unabhängig von der Umgebungsfeuchte schnell aus, kann in dicken Schichten und/oder zwischen wasserdichten Substraten eingesetzt werden und zeigt kaum Schwund bei der Aushärtung. Bevorzugt enthält die härtbare Zusammensetzung weniger als 5 Gewichts-%, bevorzugt weniger als 2 Gewichts-%, insbesondere weniger als 1 Gewichts-%, Wasser bezogen auf die gesamte Zusammensetzung.

Bevorzugt wird die härtbare Zusammensetzung in Form eines Zweikomponentensystems eingesetzt.

Bevorzugt umfasst die Zusammensetzung eine Komponente **K1** und eine Komponente **K2,** welche jeweils für sich allein lagerstabil sind und in voneinander getrennten Gebinden gelagert werden, wobei Verbindungen mit Ketoestergruppen der Formel (I) Bestandteil der Komponente **K1** und Verbindungen mit Aldimingruppen der Formel (II) Bestandteil der Komponente **K2** sind. Eine solche härtbare Zusammensetzung wird auch als zweikomponentige Zusammensetzung bezeichnet. Die beiden Komponenten **K1** und **K2** sind für sich allein lagerstabil und werden in voneinander getrennten Gebinden gelagert, bis sie kurz vor oder während der Applikation miteinander vermischt werden und somit die Aushärtung beginnt.

Weitere Inhaltsstoffe der Zusammensetzung können in der Komponente **K1** und/oder **K2** enthalten sein. Mit Aldimingruppen der Formel (II) reaktive Substanzen sind bevorzugt ein Bestandteil der Komponente **K1.** Mit Ketoestergruppen der Formel (I) reaktive Substanzen sind bevorzugt ein Bestandteil der Komponente **K2.**

Die Konsistenz der Komponente **K1** und der Komponente **K2** ist geeigneter Weise so, dass die Komponenten bei Umgebungsbedingungen mit einfachen Verfahren gut miteinander vermischt werden können. Dazu sind insbesondere flüssige oder pastöse Komponenten geeignet.

Die Komponente **K1** und die Komponente **K2** der härtbaren Zusammensetzung werden getrennt voneinander hergestellt. Dabei werden die Inhaltsstoffe der jeweiligen Komponente miteinander vermischt, so dass eine makroskopisch homogene Masse entsteht. Die Komponenten **K1** und **K2** werden jeweils in einem separaten Gebinde gelagert. Geeignete Gebinde sind insbesondere Fässer, Container, Hobbocks, Eimer, Kanister, Dosen, Beutel, Schlauchbeutel, Kartuschen oder Tuben.

Zur Anwendung der härtbaren Zusammensetzung werden alle Inhaltsstoffe, insbesondere als Komponenten **K1** und **K2,** kurz vor oder während der Applikation miteinander vermischt. Das Mischungsverhältnis wird dabei bevorzugt so gewählt, dass das Verhältnis der Anzahl Ketoestergruppen der Formel (I) zur Anzahl Aldimingruppen der Formel (II) im erfindungsgemässen Bereich liegt. In Gewichtsteilen liegt das Mischungsverhältnis typischerweise im Bereich von etwa 50:1 bis 1:5, insbesondere 10:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und dem damit verbundenen Anstieg der Viskosität zu Störungen wie beispielsweise einem ungenügenden Verlauf oder einer verlangsamten oder unvollständigen Haftung zum Substrat kommen kann. Insbesondere soll die Offenzeit der Zusammensetzung während der Applikation nicht überschritten werden.

Als 'Offenzeit" wird die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, bevorzugt bei einer Temperatur im Bereich von -5 bis 50 °C, bevorzugt 0 bis 40 °C, insbesondere 5 bis 35 °C.

Mit dem Vermischen der Inhaltsstoffe oder Komponenten beginnt die Zusammensetzung durch die einsetzende chemische Reaktion auszuhärten.

Es kann vermutet werden, dass typischerweise zwei Ketoestergruppen der Formel (I) mit einer Aldimingruppe der Formel (II) unter Freisetzung von Wasser zu einer cycloaliphatische Struktureinheit reagieren. Die Beobachtung, dass beim Einsatz von Aldiminen **L** abgeleitet von Benzaldehyd während und nach der Aushärtung kein Aldehyd-Geruch feststellbar ist, deutet darauf hin, dass der dem Aldimin zugrunde liegende Aldehyd bei der Aushärtungsreaktion nicht freigesetzt, sondern im Polymer eingebunden wird und somit dauerhaft in der ausgehärteten Zusammensetzung verbleibt.

Die Aushärtung erfolgt bevorzugt bei Umgebungstemperatur, bevorzugt bei einer Temperatur im Bereich von -5 bis 50°C, insbesondere 0 bis 40°C.

Ein weiterer Gegenstand der Erfindung ist die ausgehärtete Zusammensetzung, erhalten aus der härtbaren Zusammensetzung nach dem Vermischen der Inhaltsstoffe oder Komponenten und anschliessendem Aushärten.

Bevorzugt weist die ausgehärtete Zusammensetzung eine hohe Dehnbarkeit, eine hohe Zugfestigkeit, einen hohen Weiterreisswiderstand und eine geringe Temperaturabhängigkeit der mechanischen Eigenschaften auf.

Bevorzugt weist die ausgehärtete Zusammensetzung eine Bruchdehnung von mindestens 25 %, bevorzugt mindestens 50 %, insbesondere mindestens 100 %, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung eine Zugfestigkeit von mindestens 1.5 MPa, bevorzugt mindestens 3 MPa, insbesondere mindestens 5 MPa, auf, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

Bevorzugt weist die ausgehärtete Zusammensetzung einen Weiterreisswiderstand von mindestens 2.5 N/mm, bevorzugt mindestens 5 N/mm, besonders bevorzugt mindestens 10 N/mm, insbesondere mindestens 15 N/mm, auf, bestimmt gemäss DIN ISO 34-1 Verfahren B (winkelförmiger Prüfkörper) bei einer Probendicke von 2 mm und einer Zuggeschwindigkeit von 500 mm/min.

Bevorzugt weist die ausgehärtete Zusammensetzung im Temperaturbereich von -20 bis 60 °C, bevorzugt -35 bis 70 °C, insbesondere -40 bis 80 °C, keine Glasübergangstemperatur (Tg) auf, bestimmt mittels DMTA an streifenförmigen Proben (Länge 75 mm, Breite 10 mm, Dicke 2 mm) im Schermodus mit 10 Hz Anregungsfrequenz im Temperaturbereich von -80 bis 120 °C bei einer Heizrate von 5 K/min unter Bestimmung des komplexen Elastizitätsmoduls, wobei ein Maximum in der Kurve für den Verlustwinkel als Tg-Wert abgelesen wird.

Die härtbare Zusammensetzung eignet sich für eine Vielzahl von Verwendungen. Sie wird insbesondere verwendet als Klebstoff, Dichtstoff, Beschichtung, Giessharz oder Spachtelmasse, insbesondere als elastischer Klebstoff, Dichtstoff oder Beschichtung.

Ein weiterer Gegenstand der Erfindung ist die Verwendung der härtbaren Zusammensetzung als elastischer Klebstoff, elastischer Dichtstoff oder elastische Beschichtung, wobei die Inhaltsstoffe oder Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Der Artikel besteht aus der ausgehärteten Zusammensetzung oder ist mit ihr verklebt, abgedichtet oder beschichtet. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beschreibung der Bilder:

- **Figur 1**: zeigt den Kurvenverlauf des komplexen Elastizitätsmoduls und des Verlustwinkels der Zusammensetzung **Z-2** vs der Temperatur mit den Tg-Werten.
- **Figur 2**: zeigt den Kurvenverlauf der Zugspannung vs der Dehnung von mehreren Prüfkörpern der Zusammensetzung **Z-2.**
- **Figur 3**: zeigt den Kurvenverlauf des komplexen Elastizitätsmoduls und des Verlustwinkels der Zusammensetzung **Z-5** vs der Temperatur mit den Tg-Werten.
- **Figur 4**: zeigt den Kurvenverlauf der Zugspannung vs der Dehnung von mehreren Prüfkörpern der Zusammensetzung **Z-5.**
- **Figur 5**: zeigt den Kurvenverlauf des komplexen Elastizitätsmoduls und des Verlustwinkels der Zusammensetzung **Z-14** vs der Temperatur mit den Tg-Werten.
- **Figur 6**: zeigt den Kurvenverlauf der Zugspannung vs der Dehnung von mehreren Prüfkörpern der Zusammensetzung **Z-14.**

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Merck.

Die **Viskosität** wurde auf einem thermostatisierten Kegel-Platte-Viskosimeter Rheotec RC30 (Kegeldurchmesser 10 mm, Kegelwinkel 1°, Kegelspitze-Platte-Abstand 0.05 mm, Scherrate 10 s⁻¹) gemessen. Viskositäten von weniger als 0.5 Pa s wurden mit einem Kegeldurchmesser von 50 mm und einer Scherrate von 100 s⁻¹ gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen.

Herstellung von Polvetherpolvmeren mit Ketoestergruppen oder Aldiminaruppen:

### Polymer P-1:

1'000 g (0.5 mol OH) Polyoxypropylendiol (Acclaim^{®} 4200, OH-Zahl 28 mg KOH/g, von Covestro), wurde mit 87.0 g (0.55 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 1033.7 g einer klaren, leicht gelblichen Flüssigkeit mit einer Viskosität bei 20 °C von 1.15 Pa·s, einer Acetoacetat-Funktionalität von 2 und einem theoretischen Acetoacetat-Equivalentgewicht von 2084 g/eq.

### Polymer P-2:

500 g (0.5 mol OH) Polyoxypropylendiol (Voranol ^{®} 2000 L, OH-Zahl 56 mg KOH/g, von Dow) wurde mit 71.6 g (0.55 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 540.4 g einer klaren, leicht gelblichen Flüssigkeit mit einer Viskosität bei 20 °C von 0.47 Pa·s, einer Acetoacetat-Funktionalität von 2 und einem theoretischen Acetoacetat-Equivalentgewicht von 1084 g/eq.

### Polymer P-3:

500 g (1 mol OH) Polyoxypropylendiol (Voranol^{®} 1010 L, OH-Zahl 112 mg KOH/g, von Dow) wurde mit 143.1 g (1.1 mol) Ethylacetoacetat und 0.6 g Tetra-n-butyltitanat (Tyzor^{®} TnBT, von Dorf Ketal) versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 558.9 g einer klaren, farblosen Flüssigkeit mit einer Acetoacetat-Funktionalität von 2 und einem theoretischen Acetoacetat-Equivalentgewicht von 584 g/eq.

### Polymer P-4:

500 g (2.2 mol OH) Polyoxypropylendiol (Voranol^{®} P 400, OH-Zahl 250 mg KOH/g, von Dow) wurde mit 312 g (2.4 mol) Ethylacetoacetat und 0.8 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 657.6 g einer klaren, farblosen Flüssigkeit mit einer Viskosität bei 20 °C von 0.11 Pa·s, einer Acetoacetat-Funktionalität von 2 und einem theoretischen Acetoacetat-Equivalentgewicht von 308 g/eq.

### Polymer P-5:

400.0 g (0.2 mol NH₂) Polyoxypropyendiamin (Jeffamine^{®} D-4000, von Huntsman) wurde unter Stickstoffatmosphäre vorgelegt, unter gutem Rühren mit 21.2 g (0.2 mol) Benzaldehyd versetzt und anschliessend die flüchtigen Bestandteile bei 80 °C und 10 mbar Vakuum entfernt. Erhalten wurden 417.6 g einer klaren, gelblichen Flüssigkeit mit einer Aminzahl von 26.87 mg KOH/g und einem Aldimin-Equivalentgewicht von 2088 g/eq.

Herstellung von Verbindungen mit Ketoestergruppen:

### Neopentylglykoldiacetoacetat (AA-NPG):

104.1 g (1 mol) Neopentylglykol (= 2,2-Dimethyl-1,3-propandiol) wurde mit 348.0 g (2.2 mol) Ethylacetoacetat und 0.45 g Tetra-n-butyltitanat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 254.1 g Neopentylglykol-diacetoacetat als klare, gelbliche Flüssigkeit mit einer Viskosität bei 20 °C von < 0.05 Pa·s und einem theoretischen Acetoacetat-Equivalentgewicht von 136 g/eq.

### 1,2-Propandioldiacetoacetat (AA-PG):

76.1 g (1 mol) 1,2-Propandiol wurde mit 348.0 g (2.2 mol) tert-Butylacetoacetat versetzt und bei einer Temperatur von 140 °C unter Vakuum umgesetzt, bis im FT-IR die breite OH-Bande im Bereich von 3'300 bis 3'600 cm⁻¹ verschwunden war und keine flüchtigen Stoffe mehr abgeschieden wurden. Erhalten wurden 237.8 g 1,2-Propandiol-diacetoacetat als klare, gelbliche Flüssigkeit mit einer Viskosität bei 20 °C von < 0.05 Pa·s und einem theoretischen Acetoacetat-Equivalentgewicht von 122 g/eq.

### Herstellung von Aldiminen:

### Aldimin D-1:

212.2 g (2 mol) Benzaldehyd wurde unter Stickstoffatmosphäre vorgelegt, unter gutem Rühren mit 102.2 g (1 mol) 1,5-Pentandiamin (von Cathay Biotech) versetzt und anschliessend die flüchtigen Bestandteile bei 80 °C und 10 mbar Vakuum entfernt. Erhalten wurden 286.0 g N,N'-Dibenzyliden-1,5-pentandiamin als klare, gelbliche Flüssigkeit mit einer Viskosität < 0.05 Pa s bei 20 °C, einer Aminzahl von 403 mg KOH/g und einem Aldimin-Equivalentgewicht von 139.2 g/eq.

### Aldimin D-2:

212.2 g (2 mol) Benzaldehyd wurde unter Stickstoffatmosphäre vorgelegt, unter gutem Rühren mit einer Mischung aus 51.1 g (0.5 mol) 1,5-Pentandiamin und 58.1 g (0.5 mol) 1,6-Hexandiamin versetzt und anschliessend die flüchtigen Bestandteile bei 80 °C und 10 mbar Vakuum entfernt. Erhalten wurden 289.8 g einer klaren, gelblichen Flüssigkeit mit einer Viskosität bei 20 °C von 0.09 Pa·s, einer Aminzahl von 393 mg KOH/g und einem Aldimin-Equivalentgewicht von 142.7 g/eq.

### Aldimin D-3:

212.2 g (2 mol) Benzaldehyd wurde unter Stickstoffatmosphäre vorgelegt, unter gutem Rühren mit 116.2 g (1 mol) 1,5-Diamino-2-methylpentan (Dytek^{®} A, von Invista) versetzt und anschliessend die flüchtigen Bestandteile bei 80 °C und 10 mbar Vakuum entfernt. Erhalten wurden 268.2 g N,N'-Dibenzyliden-1,5-diami-no-2-methylpentan als klare, gelbliche Flüssigkeit mit einer Aminzahl von 379 mg KOH/g und einem Aldimin-Equivalentgewicht von 148 g/eq.

### Aldimin D-4:

212.2 g (2 mol) Benzaldehyd wurde unter Stickstoffatmosphäre vorgelegt, unter gutem Rühren mit 158.3 g (1 mol) 2,2(4),4-Trimethyl-1,6-hexandiamin (Vestamin^{®} TMD, von Evonik) versetzt und anschliessend die flüchtigen Bestandteile bei 80 °C und 10 mbar Vakuum entfernt. Erhalten wurden 333.6 g N,N'-Dibenzyliden-2,2(4),4-Trimethyl-1,6-hexandiamin als klare, gelbliche Flüssigkeit mit einer Aminzahl von 335 mg KOH/g und einem Aldimin-Equivalentgewicht von 167.3 g/eq. Die Flüssigkeit kristallisierte bei Raumtemperatur innerhalb von einigen Wochen zu einem Feststoff.

### Aldimin D-5:

106.1 g (1 mol) Benzaldehyd wurde unter Stickstoffatmosphäre vorgelegt, unter gutem Rühren mit 124.0 g (1 mol NH₂) Polyoxypropyendiamin (Jeffamine^{®} D-230, von Huntsman) versetzt und anschliessend die flüchtigen Bestandteile bei 80 °C und 10 mbar Vakuum entfernt. Erhalten wurden 210.7 g einer klaren, gelblichen Flüssigkeit mit einer Viskosität bei 20 °C von 0.34 Pa·s, einer Aminzahl von 265 mg KOH/g und einem Aldimin-Equivalentgewicht von 212 g/eq.

### Herstellung von härtbaren Zusammensetzungen:

### Zusammensetzungen Z-1 bis Z-22:

Für jedes Beispiel wurden die in den Tabellen 1 bis 3 angegebenen Inhaltsstoffe der Komponente **K1** in den angegebenen Mengen (in Gewichtsteilen) vermischt und in einem verschlossenen Gebinde aufbewahrt.

Weiterhin wurden die in den Tabellen 1 bis 3 angegebenen Inhaltsstoffe der Komponente **K2** in den angegebenen Mengen (in Gewichtsteilen) vermischt und in einem verschlossenen Gebinde aufbewahrt.

Anschliessend wurden die Komponenten **K1** und **K2** jeder Zusammensetzung mittels eines Zentrifugalmischers (Thinky ARE-250, 2000 U/min, 60 s) vermischt und wie folgt beschrieben geprüft.

Die **Gelierzeit** (Zeitspanne zwischen dem Vermischen der Komponenten und der Gelierung) wurde bestimmt, indem 10 g der vermischten Zusammensetzung mittels eines Spatels in regelmässigen Zeitabständen bewegt wurden, bis die Masse gelierte.

Zur Bestimmung der mechanischen Eigenschaften wurde die Zusammensetzung auf eine PTFE-beschichteten Folie zu einem Film von 2 mm Dicke ausgegossen, dieser durch Lagerung während 14 Tagen im Normklima ausgehärtet, einige hantelförmige Prüfkörper (Länge 75 mm, Steglänge 30 mm, Stegbreite 4 mm) aus dem Film gestanzt und diese gemäss DIN EN 53504 bei einer Zuggeschwindigkeit von 200 mm/min auf maximale **Zugfestigkeit, Bruchdehnung** und **E-Modul 5** % (zwischen 0.5-5 % Dehnung) geprüft.

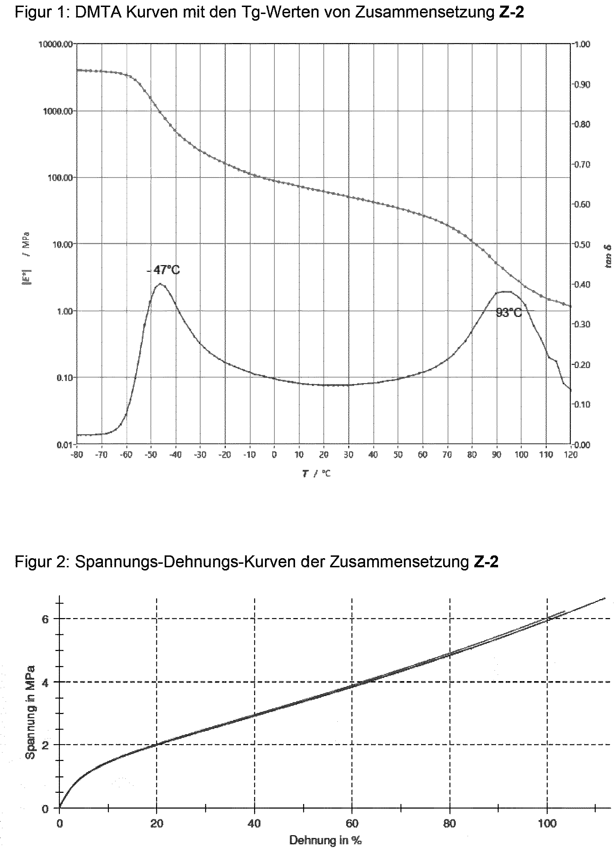

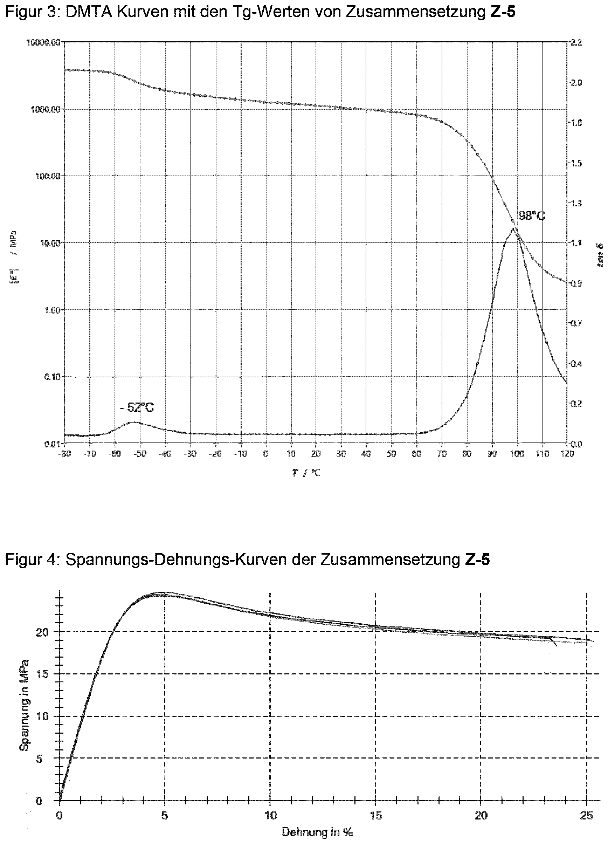

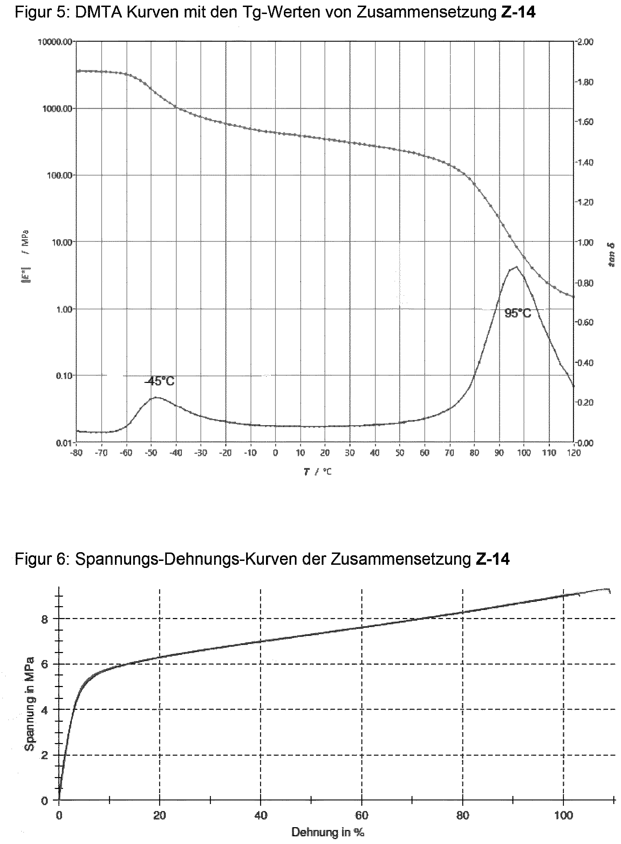

Die **Figuren 2****,** **4** und **6** zeigen den Kurvenverlauf der Zugspannung vs der Dehnung von mehreren Prüfkörpern der Zusammensetzungen **Z-2, Z-5** und **Z-14.**

Weiter wurden einige Prüfkörper zur Bestimmung des **Weiterreisswiderstandes** aus dem Film von 2 mm Dicke ausgestanzt und gemäss DIN ISO 34-1, Verfahren B (winkelförmiger Prüfkörper) bei einer Zuggeschwindigkeit von 500 mm/min geprüft.

Die **Shore A** bzw. **D** Härte wurde nach DIN 53505 an zylindrischen Prüfkörpern (Durchmesser 20 mm, Dicke 5 mm) nach einer Lagerzeit von 14 Tagen im Normklima bestimmt.

Der **Tg**-Wert (Glasübergangstemperatur) wurde bestimmt mittels DMTA-Messung an streifenförmigen Proben (Länge 75 mm, Breite 10 mm, Dicke 2 mm), welche 14 d im Normklima gelagert waren, Messung im Schermodus mit 10 Hz Anregungsfrequenz im Temperaturbereich von -80 bis 120 °C bei einer Heizrate von 5 K/min unter Bestimmung des komplexen Elastizitätsmoduls, wobei ein Maximum in der Kurve für den Verlustwinkel "tan δ" als Tg-Wert abgelesen wurde.

Die **Figuren 1****,** **3** und **5** zeigen die DMTA Kurven mit den Tg-Werten der Zusammensetzungen **Z-2, Z-5** und **Z-14.** Die obere Kurve zeigt jeweils den Verlauf des komplexen Elastizitätsmoduls und die untere Kurve den Verlauf des Verlustwinkels "tan δ" vs der Temperatur.

Während der Applikation und Aushärtung der Zusammensetzungen war jeweils kein Aldehyd-Geruch feststellbar. Es entstanden geruchsfreie, nicht-klebrige Filme.

Die Resultate sind in den Tabellen 1 bis 3 angegeben.

Die mit "**(Ref.)**" bezeichneten Beispiele sind Vergleichsbeispiele.

**Tabelle 1: Zusammensetzung und Eigenschaften von Z-1 bis Z-8.**

| **Zusammensetzung** | **Z-1** | **Z-2** | **Z-3** | **Z-4** | **Z-5** | **Z-6** | **Z-7** | **Z-8** |
|---|---|---|---|---|---|---|---|---|
| **Komponente K1:** | | | | | | | | |
| Polymer **P-1** | 69.6 | 64.7 | 59.8 | 49.3 | 38.0 | 32.1 | 69.2 | 50.3 |
| AA-NPG ¹ | 30.4 | 35.3 | 40.2 | 50.7 | 62.0 | 67.9 | 30.8 | 49.7 |
| **Komponente K2:** | | | | | | | | |
| Aldimin **D-1** | 14.3 | 16.2 | 18.1 | 22.1 | 26.4 | 28.6 | 18.1 | 18.1 |
| Verhältnis (I) / (II) ² | 2.5 | 2.5 | 2.5 | 2.5 | 2.5 | 2.5 | 2.0 | 3.0 |
| Gelierzeit [h:min] | 7:00 | n.b. | n.b. | 2:00 | 1:50 | 1:40 | n.b. | 5:30 |
| Zugfestigkeit [MPa] | 5.1 | 6.0 | 8.4 | 12.0 | 24.4 | 31.1 | 6.0 | 1.6 |
| Bruchdehnung [%] | 105 | 100 | 100 | 56 | 25 | 10 | 89 | 25 |
| E-Modul 5% [MPa] | 15.3 | 19.9 | 15.9 | 186 | 516 | 666 | 26.5 | 13.9 |
| Weiterreisswiderstand [N/mm] | 7.7 | 9.0 | 16.9 | 34 | 45 | 45 | 10.9 | 3.6 |
| Shore | 76 A | 80 A | 89 A | 95 A | | | 85 A | 66 A |
| | 21 D | 24 D | 31 D | 47 D | 63 D | 68 D | 26 D | 13D |
| Tg [°C] | n.b. | -47 93 | -45 90 | n.b. | -52 98 | n.b. | -45 90 | n.b. |

| | | | | | | | | |
|---|---|---|---|---|---|---|---|---|
| ¹ Neopentylglykoldiacetoacetat ² Verhältnis der Anzahl Ketoestergruppen der Formel (I) zur Anzahl Aldimingruppen der Formel (II) "n.b." steht für "nicht bestimmt" | | | | | | | | |

**Tabelle 2: Zusammensetzung und Eigenschaften von Z-9 bis Z-15.**

| **Zusammensetzung** | **Z-9** | **Z-10** | **Z-11** | **Z-12** | **Z-13** | **Z-14** | **Z-15 (Ref.)** |
|---|---|---|---|---|---|---|---|
| **Komponente K1:** | | | | | | | |
| Polymer **P-1** | 59.2 | 57.75 | 54.8 | 41.7 | 27.0 | - | 59.5 |
| AA-NPG | 40.8 | 42.25 | 45.2 | 58.3 | 73.0 | 47.4 | 40.5 |
| **Komponente K2:** | | | | | | | |
| Aldimin **D-2** | - | - | - | - | - | 16.3 | - |
| Aldimin **D-3** | 19.45 | - | - | - | - | - | - |
| Aldimin **D-4** | - | 23.0 | - | - | - | - | - |
| Aldimin **D-5** | - | - | 30.4 | 38.0 | 46.6 | - | - |
| Polymer **P-5** | - | - | | - | - | 52.6 | - |
| Ketimin**-1** ² | - | - | | - | - | - | 22.7 |
| Verhältnis (I) / (II) ³ | 2.5 | 2.5 | 2.5 | 2.5 | 2.5 | 2.5 | 2.5 ⁴ |
| Gelierzeit [h:min] | n.b. | n.b. | n.b. | n.b. | 1:30 | n.b. | n.m.5 |
| Zugfestigkeit [MPa] | 7.8 | 7.9 | 6.2 | 12.4 | 35.9 | 9.2 | n.m.5 |
| Bruchdehnung [%] | 108 | 106 | 167 | 116 | 8 | 106 | |
| E-Modul 5% [MPa] | 111 | 80 | 55 | 245 | 716 | 103 | |
| Weiterreisswiderstand [N/mm] | 35 | 27 | 23 | 65 | 36 | 33 | n.m.5 |
| Shore | 91 A | 92 A | 85 A | | | 94 A | n.m.5 |
| | 38 D | 34 D | 28 D | 49 D | 67 D | 40 D | |
| Tg [°C] | -43 85 | n.b. | -42 63 | n.b. | n.b. | -45 95 | n.m.5 |

| | | | | | | | |
|---|---|---|---|---|---|---|---|
| Neopentylglykoldiacetoacetat ² Diketimin aus Isophorondiamin und Methylisobutylketon ³ Verhältnis der Anzahl Ketoestergruppen der Formel (I) zur Anzahl Aldimingruppen der Formel (II) ⁴ Verhältnis der Anzahl Ketoestergruppen der Formel (I) zur Anzahl Ketimingruppen ⁵ nicht messbar (härtet nicht aus) "n.b." steht für "nicht bestimmt" | | | | | | | |

**Tabelle 3: Zusammensetzung und Eigenschaften von Z-16 bis Z-22.**

| **Zusammensetzung** | **Z-16** | **Z-17** | **Z-18** | **Z-19** | **Z-20** | **Z-21** | **Z-22 (Ref.)** |
|---|---|---|---|---|---|---|---|
| **Komponente K1:** | | | | | | | |
| Polymer **P-1** | 63.9 | - | - | - | - | - | - |
| Polymer **P-2** | - | 67.8 | 57.8 | 52.3 | 40.2 | - | - |
| Polymer **P-3** | - | - | - | - | - | 64.8 | - |
| Polymer **P-4** | - | - | - | - | - | - | 100 |
| AA-NPG | - | - | - | 47.7 | 59.8 | - | - |
| AA-PG ² | 36.1 | 32.2 | 47.2 | - | - | 35.2 | - |
| **Komponente K2:** | | | | | | | |
| Aldimin **D-2** | 18.6 | 18.6 | 22.8 | 22.8 | 27.2 | 22.8 | 18.6 |
| Verhältnis (I) / (II) ³ | 2.5 | 2.5 | 2.5 | 2.5 | 2.5 | 2.5 | 2.5 |
| Gelierzeit [h:min] | n.b. | n.b. | n.b. | 3:00 | 2:00 | n.b. | n.b. |
| Zugfestigkeit [MPa] | 8.5 | 5.5 | 10.1 | 9.2 | 15.0 | 6.5 | 0.4 |
| Bruchdehnung [%] | 139 | 147 | 112 | 120 | 70 | 112 | 41 |
| E-Modul 5% [MPa] | 8.1 | 11 | 96 | 121 | 291 | 14 | 0.8 |
| Weiterreisswiderstand [N/mm] | 5.7 | 11.4 | 34 | 38 | 69 | 11.1 | 1.4 |
| Shore | 70 A | 71 A | 94 A | 96 A | 80 A | 65 A | 31 A |
| | 19 D | 26 D | 47 D | 52 D | 65 D | 22 D | |
| Tg [°C] | -42 | -25 | -27 | -20 | -20 | -10 | 2 |
| | 97 | 47 | 80 | 63 | 80 | 45 | |

| | | | | | | | |
|---|---|---|---|---|---|---|---|
| Neopentylglykoldiacetoacetat ² 1,2-Propandioldiacetoacetat ³ Verhältnis der Anzahl Ketoestergruppen der Formel (I) zur Anzahl Aldimingruppen der Formel (II) "n.b." steht für "nicht bestimmt" | | | | | | | |

## Patentansprüche

1. Härtbare Zusammensetzung umfassend
- mindestens ein Polyetherpolymer **A** mit Ketoestergruppen der Formel (I) oder Aldimingruppen der Formel (II), welches in Bezug auf diese Reaktivgruppen eine mittlere Funktionalität von 1.7 bis 3.0 und ein mittleres Equivalentgewicht von mindestens 500 g/eq aufweist,
- mindestens eine Verbindung **B** mit Ketoestergruppen der Formel (I), welches in Bezug auf diese Reaktivgruppen ein Equivalentgewicht von 114 bis 250 g/eq aufweist, und
- mindestens ein Aldimin **L** mit Aldimingruppen der Formel (II) und einem Aldimin-Equivalentgewicht von 110 bis 350 g/eq, 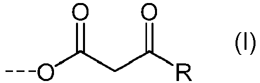 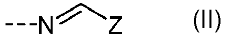
wobei R für einen einwertigen Kohlenwasserstoffrest mit 1 bis 10 C-Atomen steht und Z für einen aromatischen oder heteroaromatischen fünf- oder sechsgliedrigen Ring steht, der gegebenenfalls substituiert und/oder anelliert ist und insgesamt 4 bis 25 C-Atome umfasst, und
wobei das Verhältnis zwischen der Anzahl Ketoestergruppen der Formel (I) und der Anzahl Aldimingruppen der Formel (II) in der gesamten Zusammensetzung bei 2 bis 3 liegt.

2. Zusammensetzung gemäss Anspruch 1, **dadurch gekennzeichnet, dass** das Polyetherpolymer **A** ein mittleres Equivalentgewicht von 1'000 bis 6'000 g/eq, bevorzugt 1'500 bis 3'000 g/eq, aufweist.

3. Zusammensetzung gemäss Anspruch 1 oder 2, **dadurch gekennzeichnet, dass** das Polyetherpolymer **A** Repetiereinheiten ausgewählt aus der Liste bestehend aus Oxy-1,2-propylen, Oxy-1,3-propylen, Oxy-1,4-butylen, Oxy-1,2-butylen und Oxyphenylethylen enthält.

4. Zusammensetzung gemäss einem der Ansprüche 1 bis 3, **dadurch gekennzeichnet, dass** R für Methyl steht und die Ketoestergruppen der Formel (I) somit für Acetoacetatgruppen stehen.

5. Zusammensetzung gemäss einem der Ansprüche 1 bis 4, **dadurch gekennzeichnet, dass** Z für Phenyl steht.

6. Zusammensetzung gemäss einem der Ansprüche 1 bis 5, **dadurch gekennzeichnet, dass** das Polyetherpolymer **A** Ketoestergruppen der Formel (I) aufweist und insbesondere ein Poly(oxy-1,2-propylen)diol-diacetoacetat mit einem mittleren Equivalentgewicht von 1'000 bis 5'000 g/eq, bevorzugt 1'500 bis 3'000 g/eq, ist

7. Zusammensetzung gemäss einem der Ansprüche 1 bis 5, **dadurch gekennzeichnet, dass** das Polyetherpolymer **A** Aldimingruppen der Formel (II) aufweist und insbesondere ein N,N'-Dibenzyliden-poly(oxy-1,2-propylen)diamin mit einem mittleren Equivalentgewicht von 1'000 bis 3'000 g/eq, bevorzugt 1'500 bis 3'000 g/eq, ist.

8. Zusammensetzung gemäss einem der Ansprüche 1 bis 7, **dadurch gekennzeichnet, dass** die Verbindung **B** ausgewählt ist aus der Liste bestehend aus 1,2-Propandioldiacetoacetat, Dipropylenglykoldiacetoacetat, Tripropylenglykoldiacetoacetat, 1,3-Propandioldiacetoacetat, 1,4-Butandioldiacetoacetat, 2-Methyl-1,3-propandioldiacetoacetat, 1,5-Pentandioldiacetoacetat, Neopentylglykoldiacetoacetat, 1,6-Hexandioldiacetoacetat, Isosorbid-diacetoacetat, 4,4'-Isopropyliden-bis(cyclohexanol)diacetoacetat, Polytetrahydrofuran-diacetoacetat mit mittlerem Molekulargewicht Mₙ von 320 bis 500 g/mol, Glycerin-diacetoacetat, Glycerin-triacetoacetat, 1,1,1-Trimethylolethan-diacetoacetat, 1,1,1-Trimethylolethan-triacetoacetat, 1,1,1-Trimethylolpropan-diacetoacetat, 1,1,1-Trimethylolpropan-triacetoacetat und dem Triacetoacetat von propoxyliertem 1,1,1-Trimethylolpropan mit insgesamt einem mittleren Molekulargewicht Mₙ von 500 bis 750 g/mol.

9. Zusammensetzung gemäss einem der Ansprüche 1 bis 8, **dadurch gekennzeichnet, dass** das Gewichtsverhältnis zwischen Verbindungen **B** und Polyetherpolymeren **A** im Bereich von 15/85 bis 85/15, bevorzugt 20/80 bis 80/20, insbesondere 25/75 bis 75/25, liegt.

10. Zusammensetzung gemäss einem der Ansprüche 1 bis 9, **dadurch gekennzeichnet, dass** das Aldimin L ein Aldimin der Formel (III) ist, 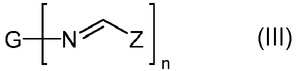
wobei n für 2 oder 3 und G für einen n-wertigen organischen Rest mit 2 bis 25 C-Atomen stehen,
insbesondere ausgewählt aus der Liste bestehend aus N,N'-Dibenzyliden-1,5-pentandiamin, N,N'-Dibenzyliden-1,6-hexandiamin, N,N'-Dibenzyliden-2-methyl-1,5-pentandiamin, N,N'-Dibenzyliden-2,2(4),4-trimethyl-1,6-hexandiamin, N,N'-Dibenzyliden-1,3-bis(aminomethyl)cyclohexan, N,N'-Dibenzyliden-1,3-bis(aminomethyl)benzol, N,N'-Dibenzylidenisophorondiamin, N,N'-Dibenzyliden-4,4'-methylen-bis(cyclohexylamin), N,N'-Dibenzylidenpolyoxy-propylendiaminen mit mittlerem Molekulargewicht Mₙ von 350 bis 750 g/mol und N,N',N"-Tribenzylidenpolyoxypropylentriaminen mit mittlerem Molekulargewicht Mₙ von 450 bis 700 g/mol, sowie den analogen Aldiminen abgeleitet von Tolualdehyd, 4-Methoxybenzaldehyd, Furfural und 5-Hydroxymethylfurfural anstelle von Benzaldehyd.

11. Zusammensetzung gemäss einem der Ansprüche 1 bis 10, **dadurch gekennzeichnet, dass** bezogen auf die gesamte Zusammensetzung weniger als 10 Gewichts-%, bevorzugt weniger als 5 Gewichts-%, insbesondere weniger als 1 Gewichts-%, flüchtige organische Verbindungen (VOC) mit einem Siedepunkt bei Normaldruck von weniger als 250 °C, insbesondere organische Lösemittel, enthalten sind.

12. Zusammensetzung gemäss einem der Ansprüche 1 bis 11, **dadurch gekennzeichnet, dass** die Zusammensetzung eine Komponente **K1** und eine Komponente **K2** umfasst, welche jeweils für sich allein lagerstabil sind und in voneinander getrennten Gebinden gelagert werden, wobei Verbindungen mit Ketoestergruppen der Formel (I) Bestandteil der Komponente **K1** und Verbindungen mit Aldimingruppen der Formel (II) Bestandteil der Komponente **K2** sind.

13. Ausgehärtete Zusammensetzung erhalten aus der härtbaren Zusammensetzung gemäss einem der Ansprüche 1 bis 12 nach dem Vermischen der Inhaltsstoffe oder Komponenten und anschliessendem Aushärten.

14. Ausgehärtete Zusammensetzung gemäss Anspruch 13, **dadurch gekennzeichnet, dass** die Bruchdehnung mindestens 25 %, bevorzugt mindestens 50 %, insbesondere mindestens 100 %, beträgt, bestimmt gemäss DIN EN 53504 an hantelförmigen Prüfkörpern (Länge 75 mm, Steglänge 30 mm, Stegbreite 4 mm, Dicke 2 mm) mit einer Zuggeschwindigkeit von 200 mm/min.

15. Verwendung der härtbaren Zusammensetzung gemäss einem der Ansprüche 1 bis 12 als elastischer Klebstoff, elastischer Dichtstoff oder elastische Beschichtung, wobei die Inhaltsstoffe oder Komponenten miteinander vermischt werden und die vermischte Zusammensetzung im flüssigen Zustand auf mindestens ein Substrat appliziert wird.
